# EUROPÄISCHE PATENTSCHRIFT

(11) **EP 2 153 495 B1**
(45) Veröffentlichungstag und Bekanntmachung des Hinweises auf die Patenterteilung: **01.02.2012**
(21) Anmeldenummer: 08759006.3
(22) Anmeldetag: 04.06.2008
(51) Int. Cl.: H01R 13/514

(54) **HYBRIDES UNIVERSALVERTEILERSYSTEM MIT ELEKTRISCHEN, FLUIDISCHEN UND KOMMUNIKATIONSFUNKTIONEN**
HYBRID UNIVERSAL DISTRIBUTION SYSTEM COMPRISING ELECTRICAL, FLUID, AND COMMUNICATION FUNCTIONS
SYSTÈME DE DISTRIBUTION UNIVERSEL HYBRIDE PRÉSENTANT DES FONCTIONS ÉLECTRIQUES, FLUIDIQUES ET DE COMMUNICATION

(30) Priorität: 05.06.2007 DE 202007007927 U
(43) Veröffentlichungstag der Anmeldung: 17.02.2010
(73) Patentinhaber: Bürkert Werke GmbH, 74653 Ingelfingen (DE)
(72) Erfinder: OTTLICZKY, Martin, 74670 Forchtenberg-Ernstbach (DE)
(74) Vertreter: Prinz & Partner
(86) Internationale Anmeldenummer: PCT/EP2008/004449
(87) Internationale Veröffentlichungsnummer: WO 2008/148541

(56) Entgegenhaltungen:
- DE-A1- 10 354 147
- DE-A1-102004 033 567
- DE-U1- 20 119 352

## Beschreibung

Die Erfindung betrifft einen Verteiler für die elektrische und die fluidische Versorgung von Verbrauchern einer Industrieanlage sowie für Kommunikationssignale von und zu den Verbrauchern.

Im Anlagenbau werden in den unterschiedlichsten Branchen wie Pharma-, Chemie- oder Lebensmittelindustrie Geräte auf der Aktorebene wie z.B. Stellventile mit Versorgungssystemen (Stromversorgung, Steuerung, Druckluft) durch komplexe Installationen miteinander verknüpft. Hierbei sind häufig eine Vielzahl von Aktoren jeweils mit Leitungen zu mehreren Versorgungsquellen verbunden, was einen unübersichtlichen Aufbau der Anlagen bedingt.

Es müssen Leitungen für Strom und Kommunikation sowie Schläuche für Druckluft oder andere Fluide über große Entfernungen verlegt und beispielsweise mittels T-Verbinder an die einzelnen Komponenten angeschlossen werden. Es entsteht leicht ein Wirrwarr aus Kabel und Schläuchen.

Bei dieser Art von Verdrahtungssystem ist das Fehlerrisiko sehr hoch, aber gleichzeitig ist natürlich die Fehlersuche schwierig und aufwändig.

Es fallen hohe Installationskosten an. Qualifiziertes Fachpersonal ist zur Inbetriebnahme, Wartung und zum Betreiben solcher Anlagen erforderlich.

Einzelne Komponenten können nur mit großem Aufwand geprüft oder vorgeprüft werden.

In der modernen Installationspraxis für den Anlagenbau werden deshalb bereits Verteilermodule eingesetzt. Diese Verteilermodule sind auf rein elektrische Funktionen beschränkt. Der Installationsaufwand wird dadurch also nur teilweise vereinfacht.

Aus der Robotertechnologie ist ein Hybridkabel bekannt, das gleichermaßen Datenübertragung, Druckluftzufuhr und Spannungsversorgung erlaubt. Es wäre wünschenswert diese Art von Kabel im Anlagenbau zwischen Aktorebene und Versorgungsebene einsetzen zu können.

Aus der DE 201 19 352 U1 ist es bekannt, die Steuerausgänge einer Ventilinsel mit Eingängen fluidischer Verbraucher über Leitungen zu verbinden, die sowohl einen Fluidkanal als auch mindestens einen in der Wandung des Fluidkanals integrierten Signalleiter zur Übertragung elektrischer und/oder optischer Signale aufweisen. Die Verbindung zwischen der Versorgungsebene und der Ventilinsel erfolgt dagegen über getrennte Leitungen, das heißt über eine Fluidleitung für das Fluid und eine getrennte Steuer-/Meldeleitung, die beispielsweise als Bus ausgebildet ist.

DE 103 54 147 A1 offenbart die Verwendung eines Hybridkabels im medizinischen Bereich.

Ziel der Erfindung ist es, ein hybrides Universalverteilersystem mit beliebig vielen identischen Schnittstellen zur Verfügung zu stellen, bei dem mindestens drei unterschiedliche Funktionen wie Stromversorgung, Verteilung von Kommunikationssignalen oder Druckluftversorgung zusammen auf jeweils eine gemeinsame Schnittstelle geführt werden, über die mittels nur einer einzigen Verbindung je ein Aktor komplett versorgt werden kann mit Strom, Steuersignalen und beispielsweise Druckluft.

Dies wird gemäß der Erfindung erreicht mit einem Verteiler für die elektrische und die fluidische Versorgung von Verbrauchern einer Industrieanlage sowie für Kommunikationssignale von und zu den Verbrauchern, mit
- getrennten Einspeiseanschlüssen für die elektrische und die fluidische Versorgung sowie einem Sammelanschluß für Kommunikationssignale; und
- einer Mehrzahl von gleichen Hybrid-Steckverbindern, die Steckverbinderelemente für elektrische Stromversorgung, für fluidische Versorgung und für Kommunikationssignale aufweisen und mit den entsprechenden Einspeiseanschlüssen bzw. dem Sammelanschluß in Verbindung sind.

Vorteilhafte Weiterbildungen des Verteilers sind in den Unteransprüchen angegeben.

In universellen Bausteinen werden bei dem erfindungsgemäßen Verteiler unterschiedliche Funktionen miteinander vereint.

Die Inbetriebnahme von komplexen Anlagen wird mit Hilfe der hier beschriebenen Erfindung durch Plug and Play stark vereinfacht. Eine einfache Montage ohne Spezialwerkzeuge ist möglich.

Stillstands- und Wartungszeiten werden minimiert, da Fehler einerseits vermieden werden, andererseits aber auch leichter auffindbar sind und die einzelnen Komponenten leicht ausgetauscht und vorgeprüft werden können.

Vorteilhaft am hier beschrieben Verteilersystem ist, dass ein Standardisieren von Installation ermöglicht wird.

Den Aktoren kann je nach Bedarf ein gewünschtes Fluid zur Verfügung gestellt werden, wobei das Fluid Druckluft, Hydraulikflüssigkeit oder ein beliebiges anderes Medium sein kann. Die Aktoren können beispielsweise Stellventile, Zylinder oder andere sein.

Eine wenig zerklüftete Oberfläche des Universalverteilersystems erleichtert die Reinigung. Dieses System ist geeignet für Anwendungen in rauer Umgebung. Es kann in hoher Schutzart, beispielsweise IP68 ausgeführt sein.

Es ist kompatibel zu allen modernen Kommunikationstechniken wie Feldbus, Wireless, optische Übertragung, ASI etc..

Die Erfindung kann besonders vorteilhaft eingesetzt werden, wenn es sich bei den Aktoren um miniaturisierte Geräte handelt, weil dadurch die Anzahl der Geräteschnittstellen erheblich reduziert werden kann, d.h. dieses miniaturisierte Gerät muss nur mit einem Anschluss ausgestattet sein, über den die Versorgung für Strom, Druckluft und Datenübertragung stattfindet. Bisher war eine Mindestgröße des Aktors definiert über den für die Schnittstellen benötigten Platz.

Das hybride Universalverteilersystem kann feststehend mit einer definierten Anzahl von Anschlüssen für die zu übertragenden Komponenten wie beispielsweise Strom, Kommunikationssignale und Druckluft ausgestattet sein und einer ebenfalls definierten Anzahl an Hybridsteckem, an die jeweils ein beliebiger Aktor angeschlossen werden kann.

In einem weiteren Ausführungsbeispiel ist das hybride Universalverteilersystem modular aufgebaut. Hier lassen sich beliebig viele Anschlussmodule entsprechend der gewünschten Aktoranzahl zusammensetzen.

Ein erfindungsgemäßes Universalverteilersystem ist sowohl zur Wandmontage als auch zur Profilmontage geeignet.

In einer Weiterentwicklung des Universalverteilersystems ist vorgesehen, ein Absperrventil oder mehrere zu integrieren. So können auf einfache Weise Versorgungskreise gebildet werden.

Die hier beschriebenen passiven Module können jederzeit mit weiteren Funktionen wie Feldbus oder Diagnose zu aktiven Modulen aufgerüstet werden. Dadurch wird zusätzliche Steuerung möglich.

In einem weiteren Ausführungsbeispiel kann ein bekanntes Verteilersystem, in das bereits elektrische Versorgung und Kommunikation integriert ist, dem erfindungsgemäßen Universalverteilersystem vorgeschaltet sein. Diese beiden Funktionen werden im Universalverteilersystem um Druckluft erweitert und gemeinsam auf die Hybridstecker zusammengeführt.

Weitere Merkmale und Vorteile der Erfindung ergeben sich aus der folgenden Beschreibung und aus den Zeichnungen, auf die Bezug genommen wird.

In den Zeichnungen zeigen:
**Fig. 1** Schematische Darstellung der Funktion des erfindungsgemäßen Universalverteilersystems innerhalb einer Industrieanlage
**Fig. 2** Modular aufgebautes Universalverteilersystem
**Fig. 3** Modular aufgebautes Universalverteilersystem - Rückansicht
**Fig. 4** Explosionsdarstellung von Fig. 1
**Fig. 5** Explosionsdarstellung von Fig. 2
**Fig. 6** Feststehendes Universalverteilersystem

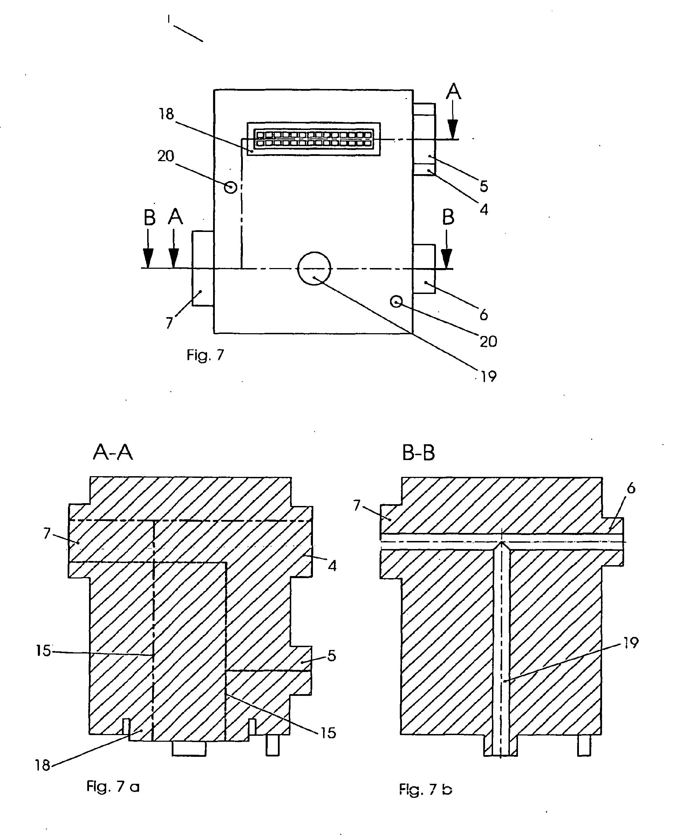

**Fig. 7** Grundmodul 1, Draufsicht
**Fig. 7a****, b** Schnitt durch Grundmodul 1

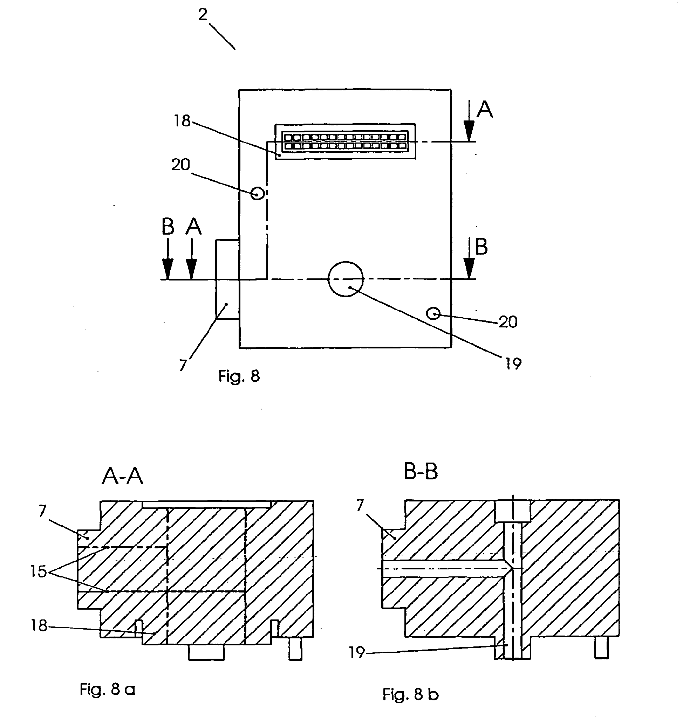

**Fig. 8** Verteilermodul 2, Draufsicht
**Fig. 8a****, b** Schnitt durch Verteilermodul 2

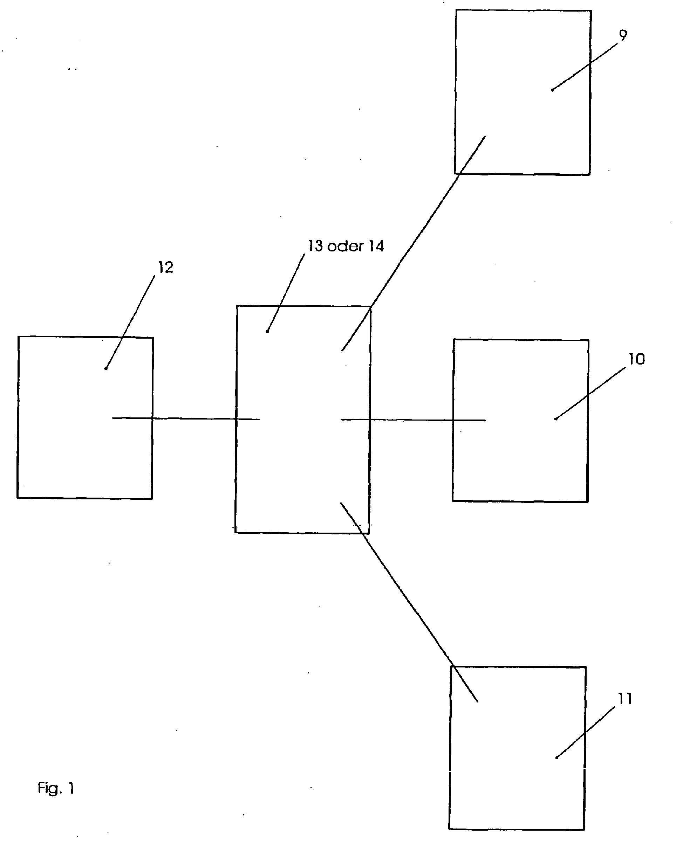

In **Fig. 1** ist die Organisation des erfindungsgemäßen Universalverteilersystems innerhalb einer Industrieanlage schematisch dargestellt. Das Universalverteilersystem 13 oder 14 wird mit mindestens drei Funktionen wie Druckluftversorgung 9, Steuerung 10 und Stromversorgung 11 verbunden. Diese drei Funktionen werden innerhalb des Universalverteilersystems 13 oder 14 zusammengeführt und gemeinsam weitergegeben an identische Schnittstellen im Universalverteilersystem. Ein Aktor 12 kann nun mittels nur eines einzigen Hybridkabels mit einer Schnittstelle des Universalverteilersystems verbunden werden, über die dem Aktor Strom, Druckluft und Kommunikationssignale zur Verfügung gestellt werden.

Wird das feststehende hybride Universalverteilersystem 14 verwendet, können so viele Aktoren angeschlossen werden wie Hybridstecker 7 vorhanden sind.

Beim Einsatz des modular aufgebauten hybriden Universalverteilersystems 13 kann die Anzahl der Hybridstecker 7 entsprechend der gewünschten Aktoranzahl variabel durch Aneinanderreihen der Verteilermodule 2 erweitert werden.

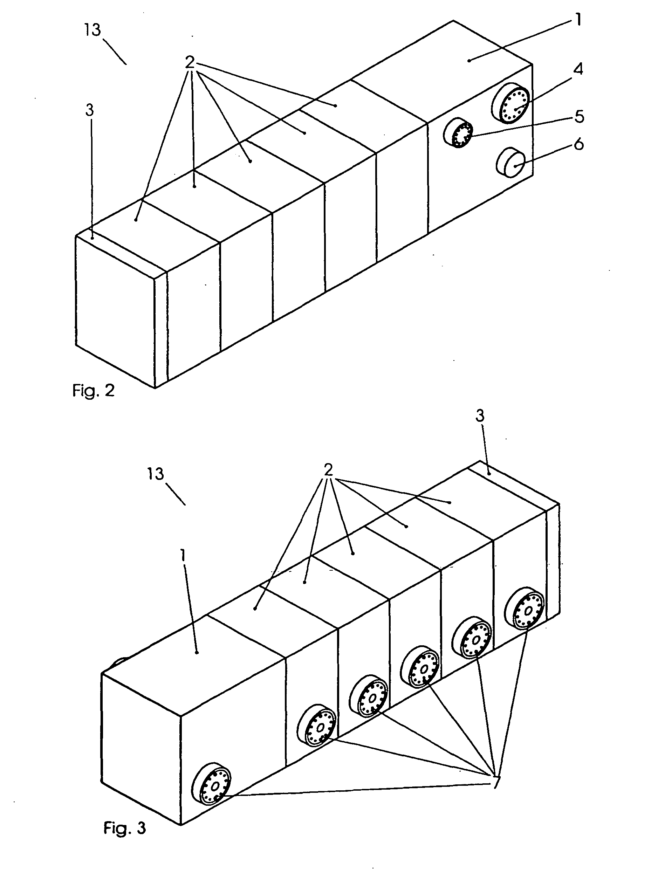

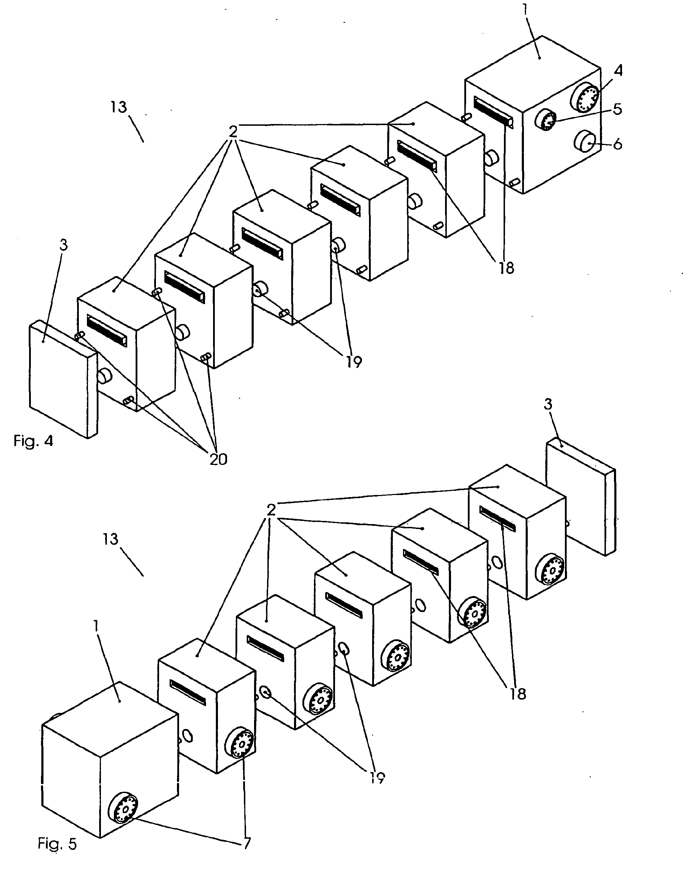

Wie aus den Abbildungen Fig.1 - 4 ersichtlich, ist das modular aufgebaute hybride Universalverteilersystem 13 aufgebaut aus einem Grundmodul 1, einer beliebigen Anzahl von Verteilermodulen 2 und einer Abschlussplatte 3.

Diese Teile werden durch Verbindungselemente 20 durch einfaches Zusammenstecken, -schnappen oder -clipsen in einer Raumrichtung von einer Seite ausgehend fest miteinander verbunden.

Das Grundmodul 1 ist im wesentlichen quaderförmig aufgebaut. An einer oder mehreren Flächen sind ein Anschluss für die Stromversorgung 4, ein Fluideingang 6, ein Anschluss für Kommunikationsübertragung 5 sowie ein Hybridstecker 7 angeordnet.

Im Hybridstecker 7 gibt es elektrische Kontakte, Kontakte für Datenübertragung und einen fluidischen Kanal oder mehrere fluidische Kanäle.

Im Inneren des Grundmoduls 1 befindet sich ein elektrischer Sammelkanal 18, der über Kanäle 15 Verbindung hat zum Anschluss für die Stromversorgung 4, zum Anschluss für Kommunikationsübertragung 5, zum benachbarten, angereihten Verteilermodul 2 sowie zum Hybridstecker 7.

In ähnlicher Weise verläuft im Innern des Grundmoduls 1 ein Sammelkanal 19 für Fluide, der verbunden ist über Verbindungskanäle 15 mit dem Fluideingang 6, dem benachbarten, angereihten Verteilermodul 2 sowie dem Hybridstecker 7.

Die Verteilermodule 2 sind wie das Grundmodul 1 im wesentlichen quaderförmig aufgebaut.

Zwei sich gegenüberliegende Flächen sind verbunden durch einen elektrischen Sammelkanal 18 sowie den Fluidkanal 19.

Die Verteilermodule 2 werden mittels der Verbindungselemente 20 so miteinander verbunden, dass sowohl der elektrische Sammelkanal 18 als auch der Fluidkanal 19 ineinander übergehende gemeinsame Kanäle bilden.

Der elektrische Sammelkanal 18 wie der Fluidkanal 19 sind verbunden über Kanäle 15 mit dem sich an einer Fläche des Verteilermoduls 2 befindenden Hybridstecker 7.

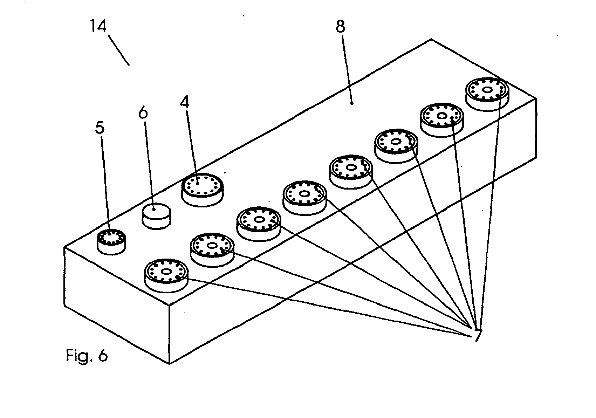

Ein weiteres Ausführungsbeispiel ist als feststehendes Universalverteilersystem 14 in Fig. 6 dargestellt.

An einer oder mehreren Flächen des Gehäuses 8 sind ein Anschluss für die Stromversorgung 4, ein Fluideingang 6, ein Anschluss für Kommunikationsübertragung 5 sowie mehrere gleichartige Hybridstecker 7 angeordnet.

Im Innern des Gehäuses 8 verlaufen wie bei dem modular aufgebauten Universalverteilersystem 13 ein Fluidkanal 19, der verbunden ist mit dem Fluideingang 6 und jedem Hybridstecker 7, sowie ein elektrischer Sammelkanal 18, der verbunden ist mit der Stromversorgung 4, dem Anschluss zur Datenübertragung 5 sowie mit jedem Hybridstecker 7.

Der Anschluss für Kommunikationsübertragung 5 ist kompatibel zu beliebigen Kommunikationstechnologien wie z.B. Feldbus, Wireless oder ASI.

## Patentansprüche

1. Verteiler (13; 14) für die elektrische und die fluidische Versorgung von Verbrauchern einer Industrieanlage sowie für Kommunikationssignale von und zu den Verbrauchern, mit
getrennten Einspeiseanschlüssen (4, 6) für die elektrische und die fluidische Versorgung sowie einem Sammelanschluss (5) für Kommunikationssignale; und
einer Mehrzahl von gleichen Hybrid-Steckverbindern (7), die Steckverbinderelemente für elektrische Stromversorgung, für fluidische Versorgung und für Kommunikationssignale aufweisen und mit den entsprechenden Einspeiseanschlüssen (4, 6) bzw. dem Sammelanschluss (5) in Verbindung sind.

2. Verteiler (13; 14) nach Anspruch 1, bei dem die Einspeiseanschlüsse (4, 6) und der Sammelanschluss (5) mit den Hybrid-Steckverbindern (7) in einem Verteilerkasten (8) zusammengefasst sind.

3. Verteiler (13) nach Anspruch 1, bei dem die Einspeiseanschlüsse (4, 6) und der Sammelanschluss (5) an einem Grundmodul (1) gebildet sind und das Grundmodul (1) mit Verteilermodulen (2) gekoppelt ist, die jeweils mindestens einen Hybrid-Steckverbinder (7) aufweisen.

4. Verteiler (13) nach Anspruch 3, bei dem die Verteilermodule (2) miteinander und mit dem Grundmodul (1) durch Steckverbinder anreihbar verbunden sind.

5. Verteiler (13) nach Anspruch 4, bei dem die Verteilermodule (2) auf einer Stirnfläche einen Hybrid-Steckverbinder (7) und auf zwei parallelen, zu der Stirnfläche senkrechten Seitenflächen die Steckverbinder aufweisen.

6. Verteiler (13) nach Anspruch 5, bei dem die Seitenflächen der Verteilermodule (2) Verbindungselemente (20) zur mechanischen Verbindung zwischen den Modulen aufweisen.

7. Verteiler (13) nach einem der Ansprüche 3 bis 6, bei dem in den Steckverbindern auf den Seitenflächen der Module Kontakte für die Stromversorgung mit Kontakten für die Kommunikationssignale in einem vom Grundmodul (1) ausgehenden und die Verteilermodule (2) durchquerenden Sammelkanal (18) zusammengefasst sind.

8. Verteiler (13; 14) nach einem der vorstehenden Ansprüche, bei dem die Kommunikationssignale über ein Bussystem übertragen werden.

9. Verteiler (13) nach einem der Ansprüche 3 bis 8, bei dem auch das Grundmodul (1) mindestens einen Hybrid-Steckverbinder (7) aufweist.

10. Verteiler (13; 14) nach einem der Ansprüche 7 bis 9, bei dem auf den Seitenflächen der Module fluidische Steckverbinder für einen vom Grundmodul (1) ausgehenden und quer durch die Verteilermodule (2) führenden Fluidkanal (19) fluchtend angeordnet sind.

## Claims

1. A distributor (13; 14) for supplying electricity and fluid to consumers of an industrial plant and for communication signals from and to the consumers, comprising
separate feed connections (4, 6) for supplying electricity and fluid as well as a collective line (5) for communication signals; and
a plurality of identical hybrid plug connectors (7) which include plug connector elements for electric power supply, for fluid supply, and for communication signals and which are in communication with the corresponding feed connections (4, 6) and with the collective line (5), respectively.

2. The distributor (13; 14) according to claim 1, in which the feed connections (4, 6) and the collective line (5) are combined with the hybrid plug connectors (7) in a distribution cabinet (8).

3. The distributor (13) according to claim 1, in which the feed connections (4, 6) and the collective line (5) are formed on a master module (1) and the master module (1) is coupled to distributor modules (2) which each include at least one hybrid plug connector (7).

4. The distributor (13) according to claim 3, in which the distributor modules (2) are connected with each other and with the master module (1) by plug connectors so as to be fitted in line.

5. The distributor (13) according to claim 4, in which the distributor modules (2) each include a hybrid plug connector (7) on an end face and the plug connectors on two parallel side faces perpendicular to the end face.

6. The distributor (13) according to claim 5, in which the side faces of the distributor modules (2) include connecting members (20) for a mechanical connection between the modules.

7. The distributor (13) according to any of claims 3 to 6, in which the plug connectors on the side faces of the modules have contacts for the power supply combined with contacts for the communication signals within a collective channel (18) proceeding from the master module (1) and traversing the distributor modules (2).

8. The distributor (13; 14) according to any of the preceding claims, in which the communication signals are transmitted via a bus system.

9. The distributor (13) according to any of claims 3 to 8, in which the master module (1) also includes at least one hybrid plug connector (7).

10. The distributor (13; 14) according to any of claims 7 to 9, in which the side faces of the modules have fluidic plug connectors arranged in alignment thereon for a fluid channel (19) proceeding from the master module (1) and passing transversely through the distributor modules (2).

## Revendications

1. Distributeur (13; 14) pour l'alimentation électrique et fluidique de consommateurs d'une installation industrielle et pour des signaux de communication depuis et vers les consommateurs, comportant :
des raccordements d'alimentation (4, 6) séparés pour l'alimentation électrique et fluidique, ainsi qu'un raccordement collectif (5) pour des signaux de communication ; et
une pluralité de connecteurs à fiches hybrides (7) identiques qui présentent des éléments de connecteur à fiches pour l'alimentation en courant électrique, pour l'alimentation fluidique et pour des signaux de communication et qui sont reliés à des raccordements d'alimentation (4, 6) correspondants ou au raccordement collectif (5), respectivement.

2. Distributeur (13 ; 14) selon la revendication 1, dans lequel les raccordements d'alimentation (4, 6) et le raccordement collectif (5) sont réunis ensemble avec les connecteurs à fiches hybrides (7) dans une boîte de distribution (8).

3. Distributeur (13) selon la revendication 1, dans lequel les raccordements d'alimentation (4, 6) et le raccordement collectif (5) sont réalisés sur un module de base (1) et le module de base (1) est couplé à des modules de distribution (2) comportant chacun au moins un connecteur à fiches hybride (7).

4. Distributeur (13) selon la revendication 3, dans lequel les modules de distribution (2) sont reliés les uns aux autres et au module de base (1) au moyen de connecteurs à fiches de manière à être alignés.

5. Distributeur (13) selon la revendication 4, dans lequel les modules de distribution (2) présentent un connecteur à fiches hybride (7) sur une face frontale et les connecteurs à fiches sur deux faces latérales parallèles et perpendiculaires à la face frontale.

6. Distributeur (13) selon la revendication 5, dans lequel les faces latérales des modules de distribution (2) comportent des éléments de liaison (20) pour la liaison mécanique entre les modules.

7. Distributeur (13) selon l'une des revendications 3 à 6, dans lequel dans les connecteurs à fiches sur les faces latérales des modules, des contacts pour l'alimentation en courant sont réunis avec des contacts pour les signaux de communication dans un canal collectif (18) partant du module de base (1) et traversant les modules de distribution (2).

8. Distributeur (13 ; 14) selon l'une des revendications précédentes, dans lequel les signaux de communication sont transmis par un système de bus.

9. Distributeur (13) selon l'une des revendications 3 à 8, dans lequel le module de base (1) présente également au moins un connecteur à fiches hybride (7).

10. Distributeur (13 ; 14) selon l'une des revendications 7 à 9, dans lequel des connecteurs à fiches fluidiques pour un canal fluidique (19) partant du module de base (1) et s'étendant à travers les modules de distribution (2) sont agencés en alignement sur les faces latérales des modules.
